# EUROPEAN PATENT SPECIFICATION

(11) **EP 0 937 411 B1**
(45) Date of publication and mention of the grant of the patent: **03.11.2004**
(21) Application number: 98200407.9
(22) Date of filing: 10.02.1998
(51) Int. Cl.: A23L 1/168, A23L 1/10, A23L 1/164, A23L 1/18

(54) **Pre-oxidized oat product, and processed cereal comprising it**
Voroxidiertes Haferprodukt und behandeltes Getreideprodukt davon
Produit à base d'avoine pré-oxidée, et céréale transformée le contenant

(43) Date of publication of application: 25.08.1999
(73) Proprietor: SOCIETE DES PRODUITS NESTLE S.A., 1800 Vevey (CH)
(72) Inventor: Burri, Josef, 1066 Epalinges (CH)
(74) Representative: Thomas, Alain

(56) References cited:
- EP-A- 0 109 318
- EP-A- 0 672 353
- WO-A-95/33384
- US-A- 3 494 769
- US-A- 4 413 018
- US-A- 4 957 762
- US-A- 4 978 543
- US-A- 5 198 255
- US-A- 5 523 109
- CEREAL CHEMISTRY., vol. 72, no. 1, 1995, MINNEAPOLIS US, pages 88-93, XP002067653
- CEREAL CHEMISTRY., vol. 73, no. 5, 1996, MINNEAPOLIS US, pages 579-587, XP002067654
- DATABASE FSTA INTERNATIONAL FOOD INFORMATION SERVICE (IFIS), FRANFURT/MAIN, DE LEHRACK U ET AL: "Neue Möglichkeiten der hydrothermischen Behandlung von Getreide und Getreideprodukten." XP002067655 & GETREIDE, MEHL UND BROT, vol. 46, no. 9, 1992, INST. FÜR GETREIDEVERARBEITUNG GMBH, O-1505 BERGHOLZ-REHBRÜCKE, GERMANY, pages 268-273,

## Description

The present invention relates to a process for manufacturing an oat containing cereal product and a process for making an intermediate oat material.

Because of their relatively high fat and lipase content practically all oats for human consumption traditionally are submitted to a hydrothermal treatment which comprises dehulling, steaming and kilning.

Traditionally, dehulling generally is carried out by an incomplete milling which provides dehulled oat groats and hulls. Steaming generally is carried out at 90 to 100°C in order to increase the moisture content of the groats from initially about 9 to 13% to about 18 to 20%. Kilning often is carried out for about 30 to 90 min from the top to the bottom through a high column the upper half of which is held at about 95 to 105°C by dry indirect heating, vapour being drawn off from the lower part, the temperature of the groats dropping there to about 45 to 55°C and their moisture content being then of from about 10 to about 14%. Often the kilned groats are rehumidified and flaked, the flakes being possibly ground further to flour.

The stability of the thus obtained comminuted, intermediate oat material, namely of the kilned oat groats, oat flakes or oat flour depends on this traditional hydrothermal treatment. However, the stability of an oat containing cereal product obtained by a process in which such a traditional intermediate product is subjected to a further heat treatment may still remain questionable. WO 95 33384 discloses a process for producing a fully and uniformly gelatinized hulled oats. Fully gelatinised oat is not always desired because it requires a very adapted, more expensive further processing to potential end products due to the increased viscosity.

US 4,957,762 discloses a high temperature, low-moisture, dry air heat treatment step, which is conducted at 204-315°C (400-600°F) for a very short period of time, that is, 30-120 s at most. Very high temperature treatments tend to require specific equipment and are usually expensive.

US 4,978,543 discloses a method for gelatinization, which involves partiallly gelatinizing oat materials and adjusting moisture to levels of 8-12%. The goal is not to have a shelf stable and processed end product.

US 4,413,018 teaches a method for preparing quick-cooking oats comprises the steps of (a) conditioning dehulled, uncut, unrolled oats at temperatures in the range of 170-220°F (77-104°C), (b) tempering the conditioned oats by steaming or boiling in water, and, (c) drying and toasting the tempered oats. According to this teaching, oxidation need to be completely avoided (abstract), which may result in oxidation during shelf life of the end-prduct.

EP 0 109 318 discloses a process for preparing sticks based on oat. The process encompasses a very adapted process to obtain the oat-sticks and cannot be generalized to treatment of oat-based material in general.

In Cereal Chemistry 72(1):88-93, 1995 experiments are disclosed that include, in its most pertinent part, storing batches of (whole) oat grains for 3.5 months at 20°C, the heat processing is conducted after soaking at 100°C by steaming in a baking oven, followed by drying. This publication studies the effects of storage of oat rains on content of free fatty acids in oats.

In Cereal Chemistry, 73(5):579-587, 1996 experiments include several variations, such as dehulling, heat processing, milling, and storage for 42 weeks. Heating included soaking in water and steaming for 10 min at 100°C and drying. A process for obtaining a processed end-product is not disclosed.

US 3,494,769 discloses a breakfast cereal prepared by heating rolled oats for 5-60 minutes, at 82-126°C to cook the starch, applying liquid milk and then drying the wet product to produce a crunchy product. It is hard to say if this product is shelf stable and if lipid oxidation is avoided.

EP 0 672 353 discloses the production of a whole-grain (preferably wheat) quick-cooking grain, which may be cooked in a few minutes. This reference is silent on products based on further comminuted material.

In the abstract "New possibilities for the hydrothermal treatment of cereals and cereal products" of Lehrack U and Volk J, in: Getreide, Mehl und Brot (1992) a hydrothermal treatment of cereal products is disclosed, which has the goal to "inhibit the enzyme complex responsible for lipid oxidation".

US 5,198,255 concerns oat containing R-T-E cereal products that are treated with a high intensity microwave field to provide products exhibiting improved stability.

US 5,523,109 describes a typical kilning process as described above. The temperatures during kilning were in the range of 185-220°F, that is, at most 104°C (see also claim 1 of D12).

A first object of the present invention is to provide a process for manufacturing an oat containing cereal product of improved stability.

A second object of the present invention is to provide a process for preparing a comminuted oat material the use of which improves the stability of an oat containing cereal product obtained by a process in which such a comminuted oat material is subjected to a further heat treatment.

The process for manufacturing an oat containing cereal product according to the present invention comprises obtaining a pre-oxidized comminuted oat material,by pre-oxidizing dehulled, steamed and kilned oat groats, flakes or flour by using a temperature of from 120 to 135°C for about 2 to 45 min during kilning, to obtain a pre-oxidized comminuted oat material having a pregalinization degree of 25 to 50%, and, therafter,heat treating at 100 to 250°C for 2 s to 60 min a mixture comprising a pre-oxidized comminuted oat material.

As a matter of facts we have noticed that a comminuted oat material having a good stability thanks to a traditional hydrothermal treatment surprisingly is not as adequate for manufacturing a stable oat containing cereal product as is a comminuted intermediate product according to the present invention.

Surprisingly, a pre-oxidized comminuted oat product, especially a product having been submitted to a relatively strong hydrothermal treatment resulting in a relatively high gelatinization degree, indeed appears to be more adequate for manufacturing an oat containing cereal product of improved stability.

A tentative hypothesis for explaining this very surprising effect may be provided as follows: While non pre-oxidized traditional intermediate products may keep well, cereal end products containing them may not keep so well due to an oxidizing effect of a further heat treatment used for manufacturing the end product. On the contrary, pre-oxidized intermediate products according to the present invention may not keep well, but end products containing them may keep well due to steam stripping of the already formed oxidation products, quenching of free radicals and formation of little more pro-oxidants, for example.

Thus, using a higher temperature during a hydrothermal treatment of oat grains would lead to a pre-oxidation due to inactivation of naturally present antioxidants (tocopherols, tocotrienols), formation of pro-oxidants, and disintegration of fat globules giving free accesss to oxygen, for example. To implement the present process for manufacturing an oat containing cereal product, a mixture is prepared which beside the pre-oxidized comminuted oat material preferably comprises water and optionally sucrose.

The mixture may have a water content of from about 10 to 70% by weight of which up to about 65% may be added water.

Beside added water, the mixture may comprise, in parts by weight, up to 100 parts, preferably from 10 to 100 parts of pre-oxidized comminuted oat material, up to 20 parts, preferably from 10 to 20 parts of sucrose and up to 90 parts, preferably from 10 to 90 parts of cereal material different from oat such as wheat, for example.

Further components of the mixture may be skimmed milk powder, cocoa powder oder any other protein rich or aroma rich component obtained from fruits, vegetables, tubers or roots, for example.

Heat treating may be caried out by cooking, especially steam injection cooking and roller drying a mixture in form of a slurry, or by extrusion-cooking or cooking-puffing a mixture in form of a dough, for example.

The heat treated product preferably is dried to a residual moisture content of from 1 to 10%.

Oat containing cereal products which may be manufactured in this way may include breakfast cereals, infant cereals, or dietetic products for adults, starting from pre-oxidized groats, flakes, flour or even bran or bran concentrate, for example.

According to the process of the present invention, pre-oxidizing dehulled, steamed and kilned oat groats, flakes or flour is carried out by using a temperature of 120 to 135°C for about 2 to 45 min during kilning, especially in order to obtain a comminuted oat material having a pregelatinization degree of 25 to 50%.

The present product and intermediate product and the present process for manufacturing and preparing them are further disclosed in more details in Example 1 in which the percentages and parts are by weight. Examples 2-4 are not within the scope of the claims and are not part of the invention.

### Example 1

Australian oat grains having a moisture content of 10.4% and a fat content of 8.7% were dehulled by an incomplete milling which provides dehulled oat groats.

The groats were steamed at 95°C to increase their moisture content to about 18 to 20%.

The steamed groats were introduced into the upper end of a kiln which was a column capable of holding one ton of groats. The temperature in the upper half of the kiln was held at 130°C by dry indirect heating. Vapour was drawn off from the lower part. The temperature of the groats dropped there to about 50°C, their moisture content was of about 10% and their gelatinization degree was about 90%. The whole kilning step had lasted for about 45 min.

By way of comparison a sample of the kilned groats was stored at 37°C for 4 months in tight metal tins. The oxidation level was measured by head space analysis (pentane; the more pentane in the head space, the higher the oxidation level). The head space was found to contain 260 ppm of pentane.

An oat containing cereal product was manufactured by preparing a mixture containing 65% water, the 35% dry matter being made of 85% dry matter of kilned groats and 15% sucrose.

The mixture was cooked by steam injection at 125°C for 30 s and roller dried at 160°C down to a residual water content of 2.5%. The dried film scraped from the roller was broken into pieces which represented the end product, namely infant cereals.

The infant cereals were stored at 37°C for 4 months in tight metal tins. The oxidation level was measured by head space analysis. The head space was found to contain 25 ppm of pentane.

### Comparative Example C1

A process for preparing kilned oat groats was carried out as disclosed in Example 1 except the fact that the temperature in the upper half of the kiln was held at 90°C instead of 130°C. The kilned groats had a gelatinization degree of about 20%.

By way of comparison a sample of the kilned groats was stored at 37°C for 4 months in tight metal tins. The oxidation level was measured by head space analysis. The head space was found to contain 30 ppm of pentane.

A process for manufacturing an oat containing cereal product was carried out as disclosed in Example 1 except the fact that the kilned groats were those of present comparative Example (i).

The dried film scraped from the roller was broken into pieces and stored at 37°C for 4 months in tight metal tins. The oxidation level was measured by head space analysis. The head space was found to contain 270 ppm of pentane.

### Example 2

German oat grains having a moisture content of 11.5% and a fat content of 6.2% were dehulled by an incomplete milling which provides dehulled oat groats.

The groats were heat treated by microwave at 132°C for 2 min.

The microwaved groats were stored at 37°C for 4 months in tight metal tins. The oxidation level was measured by head space analysis (pentane, oxygen; the less residual oxygen, the highest the oxidation level). The head space was found to contain about 100 ppm of pentane and about no residual oxygen.

### Comparative Example C2

The same oat grains as disclosed in Example 2 were dehulled by an incomplete milling which provides dehulled oat groats.

The groats were heat treated by microwave for 2 min at 120°C instead of 132°C. The microwaved groats were stored at 37°C for 4 months in

tight metal tins. The oxidation level was measured by head space analysis. The head space was found to contain about 1 ppm of pentane and about 21% of residual oxygen, which corresponds about to the maximum possible amount of residual oxygen.

### Example 3

French oat grains having a moisture content of 9.5% and a fat content of 10.9% were dehulled by an incomplete milling which provides dehulled oat groats.

The initial moisture content of the groats was increased to 17% by soaking in water. The groats were heat treated for 18 s with a superheated steam having a temperature of 170°C and an absolute pressure of 1.1 bar.

The heat treated groats had a degree of gelatinization of 33%.

By way of comparison a sample of the heat treated groats was stored at 37°C for 4 months in tight metal tins. The oxidation level was measured by head space analysis. The head space was found to contain 78 ppm of pentane.

An oat containing cereal product was manufactured by preparing a mixture containing 65% water, the 35% dry matter being made of 85% dry matter of heat treated groats and 15% sucrose.

The mixture was cooked by steam injection at 125°C for 30 s and roller dried at 160°C down to a residual water content of 2.5%. The dried film scraped from the roller was broken into pieces which represented the end product, namely infant cereals.

The infant cereals were stored at 37°C for 4 months in tight metal tins. The oxidation level was measured by head space analysis. The head space was found to contain 17 ppm of pentane.

### Example 4

A traditional oat flour having a moisture content of 10% was bought in a fresh state on the market and stored at 20°C for 4 months.

An oat containing cereal product was manufactured by preparing a mixture containing 65% water, the 35% dry matter being made of 85% dry matter of stored flour and 15% sucrose.

The mixture was cooked by steam injection at 125°C for 30 s and roller dried at 160°C down to a residual water content of 2.5%. The dried film scraped from the roller was broken into pieces which represented the end product, namely infant cereals.

The infant cereals were stored at 37°C for 4 months in tight metal tins. The oxidation level was measured by head space analysis. The head space was found to contain 15 ppm of pentane.

### Comparative Example C4

The same traditional oat flour as in Example 4, bought in a fresh state on the market and having a moisture content of 10%, was stored at -20°C for 4 months.

Two batches of infant cereals were manufactured in the way disclosed in Example 4 but one batch with the flour stored at -20°C instead of +20°C, and the other batch with flour in the fresh state.

The infant cereals were stored at 37°C for 4 months in tight metal tins. The oxidation level was measured by head space analysis. The head space was found to contain 23 ppm of pentane for the infant cereals of the first batch (flour stored at -20°C) and 33 pm for the infant cereals of the other batch (fresh flour).

## Claims

1. A process for manufacturing an oat containing cereal product, which comprises,
- obtaining a pre-oxidized comminuted oat material, by pre-oxidizing dehulled, steamed and kilned oat groats, flakes or flour by using a temperature of from 120 to 135°C for about 2 to 45 min during kilning, to obtain a pre-oxidized comminuted oat material having a pregelatinisation degree of 25 to 50%, and, thereafter,
- heat treating at 100 to 250°C for 2 s to 60 min a mixture comprising a pre-oxidized comminuted oat material.

2. A process according to claim 1, in which the mixture further comprises water and sucrose.

3. A process according to claim 1, in which the heat treating is carried out by steam cooking and roller drying, by extrusion-cooking or by cooking-puffing.

## Patentansprüche

1. Verfahren zur Herstellung eines Hafer enthaltenden Cerealienprodukts, das umfaßt
- Gewinnen eines voroxidierten zerkleinerten Hafermaterials, indem man geschältes, gedämpftes und gedarrtes Haferschrot-, Haferflocken- oder Hafermehlmaterial voroxidiert, indem man beim Darren eine Temperatur von 120 bis 135°C für etwa 2 bis 45 min anwendet, um ein voroxidiertes zerkleinertes Hafermaterial mit einem Vorverkleisterungsgrad von 25 bis 50 % zu erhalten, und danach
- Wärmebehandeln bei 100 bis 250°C für 2 s bis 60 min einer Mischung, die ein voroxidiertes zerkleinertes Hafermaterial umfaßt.

2. Verfahren nach Anspruch 1, wobei die Mischung außerdem Wasser und Saccharose umfaßt.

3. Verfahren nach Anspruch 1, wobei die Wärmebehandlung durch Dampfkochen und Walzentrocknung, durch Kochextrusion oder durch Kochen/Puffen durchgeführt wird.

## Revendications

1. Procédé de fabrication d'un produit céréalier contenant de l'avoine, qui comprend les étapes consistant à,
- obtenir une matière d'avoine broyée pré-oxydée, par pré-oxydation de gruau, flocons ou farine d'avoine décortiquée, étuvée et séchée au four, en utilisant une température de 120 à 135°C pendant environ 2 à 45 min pendant le séchage au four, pour obtenir une matière d'avoine broyée pré-oxydée ayant un degré de prégélatinisation de 25 à 50 %, puis
- traiter thermiquement de 100 à 250°C pendant 2 s à 60 min un mélange comprenant une matière d'avoine broyée pré-oxydée.

2. Procédé selon la revendication 1, dans lequel le mélange contient, de plus, de l'eau et du saccharose.

3. Procédé selon la revendication 1, dans lequel le traitement thermique est effectué par cuisson à la vapeur et séchage sur cylindres, par cuisson-extrusion ou par cuisson-expansion.
